# EUROPÄISCHE PATENTANMELDUNG

(11) **EP 1 536 176 A2**
(43) Veröffentlichungstag der Anmeldung: **01.06.2005**
(21) Anmeldenummer: 04025719.8
(22) Anmeldetag: 29.10.2004
(51) Int. Cl.: F16L 23/028

(54) **Flanschverbindung und Verfahren zu deren Herstellung**

(30) Priorität: 26.11.2003 DE 10355848
(71) Anmelder: ABB PATENT GmbH, 68526 Ladenburg (DE)
(72) Erfinder: Huybrechts, Dirk, Dr.-Ing., 69121 Heidelberg (DE); Schwiderski, Hans-Werner, Dipl.-Ing., 37176 Nörten-Hardenberg (DE); Szasz, Paul, Dipl.-Ing., 68723 Plankstadt (DE)
(74) Vertreter: Miller, Toivo

(57) **Zusammenfassung**

Die Erfindung betrifft eine Flanschverbindung, insbesondere zur Verbindung des Messrohres (6) eines Messgerätes für fluide Stoffe mit einer Prozessrohrleitung (4), umfassend eine geräteseitige (22) und eine leitungsseitige (22a) Flanschscheibe, wobei die geräteseitige Flanschscheibe (22) eine innere (24) und eine äußere Umfangsfläche aufweist und die Rohrwand des Messrohres (6) zumindest an der Rohrendzone (8) durch übereinanderliegende Schichten aus unterschiedlichen Materialien gebildet sein kann, und ist dadurch gekennzeichnet, dass die Rohrwand des Messrohres (6) an der Rohrendzone (8) eine radial nach außen weisende Anformung (12) aufweist, und dass in eingebautem Zustand von der geräteseitigen Flanschscheibe (22) über die Anformung (12) axiale Zugkräfte auf das Messrohr (6) übertragbar sind.

## Beschreibung

Die Erfindung betrifft eine Flanschverbindung, insbesondere zur Verbindung des Messrohres eines Messgerätes, mit einer Prozessrohrleitung eines verfahrenstechnischen Prozesses, gemäß dem Oberbegriff des Anspruchs 1, sowie ein Verfahren zur Herstellung einer Flanschverbindung gemäß dem Oberbegriff des Anspruchs 27.

Eine gattungsgemäße Flanschverbindung nach heutigem Stand der Technik umfasst eine geräteseitige, d.h. am Messrohr fest angebrachte, und eine leitungsseitige, d.h. an der Prozessrohrleitung fest angebrachte, Flanschscheibe. Beide Flanschscheiben werden üblicherweise mittels Spannschrauben gegeneinander gepresst und so verspannt, dass axiale Kräfte auf die Messrohre ausgeübt werden. Das Messrohrende wird dadurch gegen das Prozessrohrende gedrückt und beide werden so verspannt, dass über eine zwischen dem Messrohrende und dem Leitungsrohrende befindliche Dichtfläche dann das Messrohr fluiddicht mit dem Prozessrohr verbunden ist. Die Flanschscheiben weisen je eine innere und eine äußere Umfangsfläche auf; mit der inneren Umfangsfläche sind sie fest mit dem jeweils ihnen zugeordneten Rohrende verbunden, beispielsweise verschraubt, angeschweißt, angelötet etc..

Messrohre, die in heutigen Messgeräten eingesetzt werden, sind oft aus Stahl oder aus einem anderen Metall. Es sind aber auch Durchflussmessgeräte mit Messrohren aus Kunststoff oder Keramik allgemein bekannt. Auch Messrohre, die zumindest an den Rohrendzonen durch übereinanderliegende Schichten aus unterschiedlichen Materialien gebildet sind, beispielsweise aus einem Metallkern mit Kunststoffumhüllung, sind vorgeschlagen geworden.

Eine gattungsgemäße Flanschverbindung wird beispielsweise bei der Einbindung eines Durchflussmessgerätes in die Prozessrohrleitung, in der der Durchfluss ermittelt werden soll, eingesetzt.

Dabei erfolgt die Befestigung der geräteseitigen Flanschscheibe heute bei Metallmessrohren üblicherweise durch eine Schweißverbindung. Bei Messgeräten mit Messrohren, die nicht aus Metall bestehen, muss entweder auf eine Zwischenflansch-Montage, sog. Wafer-Montage, zurückgegriffen werden, bei dem das Messrohr keinen eigenen Flansch aufweist, sondern zwischen zwei an den Prozessrohrleitungsenden angebrachten Flanschen angebracht wird und die Verspannung zwischen diesen beiden Flanschen erfolgt, oder es wird in sehr aufwändiger Art und Weise ein Flansch an dem Nicht-Metall-Rohr angebracht.

Das Anbringen des oder der Flansche an das Messrohr muß dabei bereits am Anfang der Fertigungskette eines Durchflussmessgerätes erfolgen. Denn Durchflussmesser werden immer so aufgebaut, dass alle notwendigen Teilsysteme, wie Signalaufnehmer, Magnetsystem, Gehäuse, elektrische Anschlussvorrichtung und Transmitter, an das Messrohr angebaut werden. Die zum Befestigen des Flansches am Messrohr nach heutigem Stand der Technik nötigen Hochtemperaturprozesse (Schweißen, Löten Keramik-Metall-Verbindung, etc.) würden eine schädliche Einwirkung auf die oft empfindlichen und sehr genau einjustierten Teilsysteme haben, weshalb dieser Fertigungsschritt am Anfang des Fertigungsprozesses steht.

Die Anwender von Durchflussmessgeräten erwarten dabei heute von den Geräteherstellern, dass diese eine Vielzahl von Gerätevarianten hinsichtlich der Art der Flanschverbindung (Flanschdurchmesser, Anzahl und Durchmesser der Schraubenlöcher, etc.) für jede Rohrweite anbieten. Für die Hersteller hat das zur Folge, dass sie eine Anzahl unterschiedlicher vorgefertigter Messrohr-Flansch-Kombinationen vorrätig halten müssen, was die Lagerhaltung verteuert.

Es ist daher die Aufgabe der vorliegenden Erfindung, eine gattungsgemäße Flanschverbindung zu schaffen, die einfach herstellbar und handhabbar ist und die Nachteile der im Stand der Technik bekannten Flanschverbindungen beseitigt.

Die Aufgabe wird hinsichtlich der Flanschverbindung gelöst durch die kennzeichnenden Merkmale des Anspruchs 1 und hinsichtlich des Verfahrens zur Herstellung durch die kennzeichnenden Merkmale des Anspruchs 27.

Erfindungsgemäß also weist die Rohrwand des Messrohres an den Rohrendzonen einen Bereich mit größerem Außendurchmesser als in der Rohrmittelzone auf, der im folgenden auch als Erweiterungsbereichbezeichnet wird, mit einer auf das Rohrende hin ansteigenden Flanke, und in eingebautem Zustand sind von der geräteseitigen Flanschscheibe über den Erweiterungsbereich axiale Kräfte auf das Messrohrende übertragbar.

Bei einer erfindungsgemäßen Flanschverbindung werden also in einen Krafteinleitungsbereich am Rohrende von der geräteseitigen Flanschscheibe im Normalfall axiale Zugkräfte eingeleitet. Dadurch wird das Rohrende zum Zwecke der Rohrverbindung gegen das gegenüberliegende Ende des Prozessrohres gedrückt.

In einer vorteilhaften Ausgestaltung der Erfindung kann die Rohrwand des Messrohres in dem Erweiterungsbereich eine radial nach außen weisende Anformung aufweisen, welche vorteilhafterweise als eine Wulst mit einer zum Rohrende hin kontinuierlich ansteigenden Flanke gebildet sein kann. Das bedeutet, dass der Rohrinnendurchmesser am Rohrende gegenüber der Rohrmitte unverändert bleibt, aber der Rohraußendurchmesser zum Rohrende hin kontinuierlich ansteigt, mithin die insgesamte Rohrwandstärke, ermittelt als Differenz zwischen dem Rohraußen- und dem Rohrinnendurchmesser, zum Rohrende hin ansteigt. Die radiale Anformung kann dabei durch schichtweises Aufbringen von Faserverbundwerkstoff gebildet sein, beispielsweise durch Aufwickeln oder eine andere bekannte Schichtaufbautechnik. Das Aufbringen der Anformung mittels Faserverbundwerstoffen erfolgt im übrigen unter Anwendung von in der Faserverbundwerkstofftechnik zur Herstellung von Bauteilen bekannten Verfahren.

In einer anderen sehr vorteilhaften Ausgestaltung der Erfindung kann auch das Messrohr in dem Erweiterungsbereich am Rohrende aufgeweitet sein derart, dass durch die Aufweitung eine zum Rohrende des Messrohres hin kontinuierlich ansteigende Flanke gebildet ist. In dieser Ausführungsform bleibt die Rohrwandstärke, ermittelt als Differenz zwischen dem Rohraußen- und dem Rohrinnendurchmesser, zum Rohrende hin unverändert. Der Rohrinnen- und der Rohraußendurchmesser werden dagegen zum Rohrende hin größer.

Der Vorteil der erfindungsgemäßen Lösung besteht darin, dass nur im eingebauten Zustand eine feste Verbindung zwischen der Flanschscheibe und dem Messrohr besteht, erzeugt durch Kraft- und Formschluss. Dabei werden axiale Zugkräfte von der Flanschscheibe über die radiale Anformung auf das Messrohr übertragen, und das Messrohr wird, wie eingangs erläutert, mit der Flanschscheibe fest mit dem Gegenflansch auf Seiten des Prozessrohres verspannt.

Der eingebaute Zustand ist in diesem Sinne also derjenige, in dem der geräteseitige Flansch mit dem prozessrohrseitigen Flansch mittels der üblichen Spannvorrichtungen verbunden ist. Nur in diesem eingebauten Zustand besteht eine formschlüssige und somit fluiddichte Verbindung zwischen dem geräteseitigen Flansch und dem prozessseitigen Flansch.

Im nicht eingebauten Zustand kann die Flanschscheibe locker auf der Anformung aufliegen, oder auch auf dem Messrohrende an einer beliebigen Position gehalten sein. Jedenfalls braucht die Flanschscheibe nicht schon zu Beginn des Fertigungsprozesses fest mit dem Messrohr verbunden zu sein.

Diese erfindungsgemäße Art der Flanschverbindung ähnelt einer bekannten sogenannten Loseflansch-Verbindung. Dabei hat die Flanschscheibe, wenn sie vor Fertigstellung der Flanschverbindung auf der Anformung aufliegt, jeweils zwei Freiheitsgrade, nämlich eine Bewegung in axialer Richtung und einer Bewegung in radialer Richtung. Die axiale Bewegung zum Rohrende hin ist durch die radial ansteigende Anformung blockiert. Die axiale Bewegung in zur Rohrende entgegensetzter Richtung und die radiale Bewegung sind jedoch nicht blockiert. Als Montagehilfe kann die Flanschscheibe vor dem Herstellen der festen Flanschverbindung daher durch Montagehilfsmittel in einer vorbestimmten Position gehalten sein.

Eine besonders günstige Ausführungsvariante der Erfindung ist dadurch gekennzeichnet, dass zur Kraftübertragung zwischen der Flanschscheibe und der Anformung ein Zwischenstück angeordnet ist, das wenigstens abschnittsweise mit der Flanke der radialen Anformung in Verbindung steht. In eingebautem Zustand besteht dann zwischen der Flanschscheibe und der Anformung oder zwischen dem Zwischenstück und der Anformung eine form- und/oder kraftschlüssige Verbindung. In einer weiter bevorzugten Ausführungsform ist das Zwischenstück mehrteilig aufgeführt.

Die Verwendung eines Zwischenstückes in der gerade beschriebenen Ausführungsvariante hat den großen Vorteil, dass als Flanschscheibe ein übliches Standardteil verwendet werden kann. Vor allem aber kann die Flanschscheibe und gegebenenfalls das Zwischenstück als letzter Schritt in der Fertigungskette des Messgerätes angebracht werden. Beispielsweise kann die Anformung bereits am Beginn des Fertigungsprozesse an dem oder den Messrohrenden angebracht werden. Dann werden in üblicher Weise alle weiteren Teilsysteme an das Messrohr angebaut, bis das Messgerät fertig ist. Nun erst wird der Flanschring übergeschoben. Der Innendurchmesser des Flanschringes ist dann natürlich größer als der größte Außendurchmesser des Messrohres mit angebrachter Anformung. Das Zwischenstück kann beispielsweise aus zwei Halbschalen bestehen, die von den Seiten an das Messrohrende angebracht und miteinander verrastet werden, und zwar so, dass ein ringförmiges Zwischenstück mit einem Innendurchmesser entsteht, der größer als der Messrohrdurchmesser, aber kleiner als der Durchmesser der Anformung ist. Nun wird die Flanschscheibe, wie oben beschrieben, verspannt.

Die Variationsvielfalt durch die unterschiedlichen Flanscharten wird somit erst am Ende des Fertigungsprozesses eingebracht. Die Lagerhaltung für die Messrohre kann sich dabei auf eine begrenzte Anzahl von Messrohren unterschiedlicher Nenndurchmesser beschränken. Erst wenn das Messgerät fertig ist, wird die gewünschte Flansch/Rohr-Kombination gefertigt durch Hinzufügen der jeweils gewünschten Flanschscheibe. Die Anpassung des Innendurchmessers der Flanschscheibe an den Außendurchmesser des Messrohres mit Anformung kann dabei gegebenenfalls durch das Zwischenstück erfolgen.

Es kann aber auch das Messrohr mit dem Erweiterungsbereich ganz oder teilweise aus Faserverbundwerkstoff oder aus Metall gebildet sein.

Alternativ könnte auch das Messrohr als Metallteil und der Erweiterungsbereich ganz oder teilweise aus Faserverbundwerkstoff gebildet sein.

Vorteilhafterweise, um eine besonders gute Kraftübertragung zwischen der Flanschscheibe und dem Messrohr zu erreichen, ist die Längsschnittkontur der inneren Umfangsfläche der Flanschscheibe oder des Zwischenstückes an die Umfangskontur des Messrohres im Erweiterungsbereich angepasst.

Der Längsschnitt der äußeren Umfangskontur des Messrohres im Erweiterungsbereich kann dabei vorteilhafterweise einem Polynom n-ten Grades entsprechen, wobei n eine ganze Zahl, insbesondere zwischen 0 und 10, bevorzugt zwischen 0 und 4 und besonders bevorzugt 1 oder 2 oder 3 ist. Wenn n=1 ist, so liegt ein Polynom ersten Grades oder eine Gerade vor. Eine Umfangskontur, deren Längsschnitt einer Geraden entspricht, ist eine konische Umfangskontur. Wenn n=2 ist, so liegt ein Polynom zweiten Grades oder eine Parabel vor. Die Umfangskontur im Erweiterungsbereich hat dann einen parabelförmigen Längsschnitt. Wenn n=-1 ist, so liegt eine Hyperbel vor. Eine Umfangskontur, deren Längsschnitt einer Hyperbel entspricht, ist ein Hyperboloid.

Die Dichtfläche zwischen Messrohr und Prozessrohr kann entweder mit oder ohne zusätzlichem Dichtring ausgeführt sein. Dabei kann der Erweiterungsbereich so geformt sein, dass eine zweite Flanke, die zum Messrohrende hin weist, in der durch das Messrohrende aufgespannten Ebene liegt und somit zusammen mit dem Messrohrende eine vergrößerte Dichtfläche bildet.

Um die Einbaufreundlichkeit zu erhöhen, können das Zwischenstück und/oder die Flanschscheibe vor dem Einbau in ihrer Einbaulage provisorisch durch geeignete Montagemittel, beispielsweise Klebepunkte und/oder mechanische Haltehilfen und/oder durch Umwickeln mit Faserverbundwerkstoff gehalten sein.

Der Gegenflansch auf der Prozessrohrseite kann entweder in herkömmlicher Art angeschweißt sein, oder er ist ebenfalls in der erfindungsgemäßen Art ausgeführt.

Weitere vorteilhafte Ausgestaltungen und Verbesserungen der Erfindung und weitere Vorteile sind den weiteren Unteransprüchen zu entnehmen.

Anhand der Zeichnungen, in denen drei Ausführungsbeispiele der Erfindung dargestellt sind, sollen die Erfindung sowie weitere vorteilhafte Ausgestaltungen und Verbesserungen der Erfindung sowie weitere Vorteile näher erläutert und beschrieben werden.

Es zeigen:
- Fig. 1: eine erste Ausführungsform einer erfindungsgemäßen Flanschverbindung mit konischer Anformung,
- Fig. 2: eine zweite Ausführungsform einer erfindungsgemäßen Flanschverbindung mit hyperbolischer Anformung,
- Fig. 3: eine dritte Ausführungsform einer erfindungsgemäßen Flanschverbindung mit einer wulstförmigen Anformung,
- Fig. 4: eine vierte Ausführungsform einer erfindungsgemäßen Flanschverbindung mit einem auf der Prozessrohrseite in herkömmlicher Art angeschweißten Gegenflansch, und
- Fig. 5: eine fünfte Ausführungsform der Erfindung, mit einer konischen Aufweitung des Messrohres am Messrohrende.

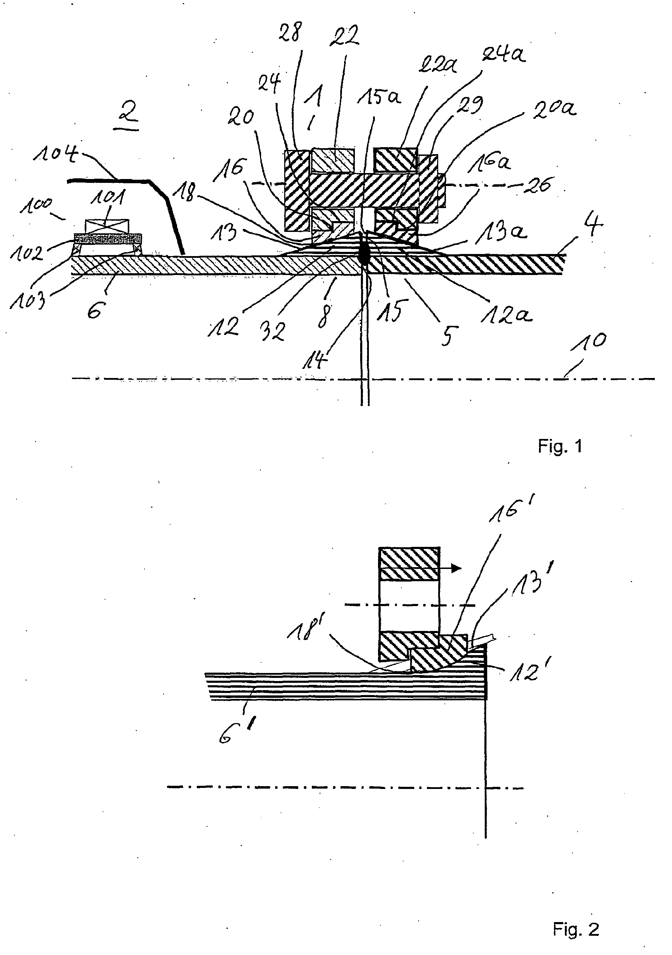

Fig. 1 zeigt im linken Teil im Längsschnitt einen Teil eines Durchflussmessgerätes 2, das über eine erfindungsgemäße Flanschverbindung 1 mit einem Prozessrohr 4 verbunden ist. Das Durchflussgerät, die Rohrleitungen und die Flanschverbindung sind rotationssymmetrisch ausgebildet, angedeutet durch die Mittellinie 10, die gleichzeitig Symmetrielinie ist.

Das Durchflussmessgerät ist als magnetisch-induktives Durchflussmessgerät ausgebildet. Es umfasst ein Messrohr 6, an dem die weiteren Teilsysteme angebaut sind. In der Fig. 1 sind aus Gründen der Übersichtlichkeit nicht alle diese Teilsysteme gezeigt, lediglich das Magnetsystem 90 mit der Erregerspule 91 und dem ferromagnetischen Kern 92, die zusammen mittels konventioneller Verbindungselemente 93 auf der Messrohr wand montiert sind, sowie das Gehäuse 94 sind dargestellt. Das Messrohr 6 besteht aus Metall, wie im Stand der Technik üblich aus Edelstahl. Es weist einen Innenradius Ri auf, der auf der ganzen Rohrlänge annähernd konstant ist, sowie einen Außendurchmesser Ra. Aus der Differenz zwischen dem Innenradius Ri und dem Außenradius Ra ist die Rohrwandstärke bestimmt..

Am Ende 8 des Messrohres 6, in einem Erweiterungsbereich E, weist die Rohrwand des Messrohres 6 eine konusförmige Anformung 12 auf. Sie weist radial nach außen, und hat eine sägezahnförmige Längsschnittkontur mit einer flach ansteigenden ersten Flanke 13 und einer steil abfallenden zweiten Flanke 15. Die dem Rohrende 8 zugewandte Steilflanke 15 der Anformung 12 bildet mit dem Rohrende 8 zusammen eine Dichtfläche 14. Die Anformung 12 wurde durch Aufwickeln eines Faserverbundwerkstoffes auf das Endstück des Messrohres 6 und anschließendes Glätten der Flanken 13, 15 hergestellt, nach einem der im Stand der Technik für die Herstellung von Bauelementen aus Faserverbundwerkstoff bekannten Verfahren, die hier nicht beschrieben zu werden brauchen.

Durch die Anformung 12 wird die effektive Rohrwandstärke t2 im Erweiterungsbereich, ermittelt als Differenz aus dem effektiven Rohraußendurchmesser, das ist der Abstand zwischen der Mittellinie und der Außenfläche der Anformung 12, und dem Rohrinnendurchmesser Ri, größer als die Rohrwandstärke t1 außerhalb des Erweiterungsbereiches E. t2 wächst, ausgehend von einem Wert t1 am geräteseitigen Anfang des Erweiterungsbereiches E, zum Rohrende hin kontinuierlich an, wobei der Längsschnitt der äußeren Umfangskontur des Messrohres im Erweiterungsbereich 12 einem Polynom 1. Grades, also einer Geraden mit einer positiven Steigung zum Rohrende hin, entspricht.

Auch das Prozessrohr 4 ist ein Metallrohr. Sein Nenndurchmesser ist dem Nenndurchmesser des Messrohres 6 angepasst. Auch auf dem Endstück 5 des Prozessrohres 4 ist eine konusförmige Anformung 12a mit sägezahnförmiger Längsschnittkontur, umfassend eine erste, flach ansteigende Flanke 13a und eine zweite, zum Rohrende hin steil abfallende Flanke 15a, aufgebracht, ebenfalls durch Aufwickeln aus Faserverbundwerkstoff und anschließendes Glätten der Flanken.

In form- und kraftschlüssigem Kontakt mit der Anformung 12 des Messrohres 6 liegt an der ersten Flanke 13 ein ringförmiges Zwischenstück 16 mit seiner inneren Umfangsfläche 18 an. Die Längsschnittkontur der inneren Umfangsfläche 18 des Zwischenstückes 16 ist der Längsschnittkontur der ersten Flanke 13 der Anformung 12 angepasst. Die äußere Umfangsfläche 20 des Zwischenstückes 16 weist eine stufenförmige Längsschnittkontur auf.

An der äußeren Umfangsfläche 20 des Zwischenstückes 16 liegt in form- und kraftschlüssiger Verbindung eine Flanschscheibe 22 mit ihrer inneren Umfangsfläche 24 an. Die Längsschnittkontur der inneren Umfangsfläche 24 der Flanschscheibe 22 ist der stufenförmigen Längsschnittkontur der äußeren Umfangsfläche 20 des Zwischenstückes 16 angepasst.

An dem Endstück 5 des Prozessrohres 4 ist in analoger Weise ein Zwischenstück 16a und eine Flanschscheibe 22a angebracht. In die Flanschscheiben 22, 22a sind in herkömmlicher Weise Bohrungen zur Aufnahme der Spannschrauben 28 eingebracht. In der Fig 1 ist nur eine solche Bohrung , angedeutet durch ihre Mittellinie 26, dargestellt. Üblicherweise sind mindesten zwei, meistens vier, sechs oder acht Bohrungen mit der entsprechenden Anzahl von Spannschrauben vorgesehen. Die Spannschraube 28 ist mit einer Kontermutter 29 verschraubt.

An der Dichtfläche 14 zwischen den beiden Rohrenden ist ein Dichtring 32 angebracht, der das Herstellen einer fluiddichten Rohrverbindung erleichtert. Wenn die Dichtflächen, gebildet durch die Rohrenden und die Steilflanken 15, 15a der Anformungen 12, 12a glatt genug ausgeführt sind, kann gegebenenfalls auch auf den Dichtring 32 verzichtet und dennoch eine fluiddichte Rohrverbindung hergestellt werden.

### Die Funktion und Herstellung der Flanschverbindung nach Fig. 1 ist die folgende:

Die Anformung 12 am Messrohr 6 wird bereits am Beginn des Fertigungsprozesses an dem Messrohrende 8 angebracht. Dann werden in üblicher Weise alle weiteren Teilsysteme an das Messrohr angebaut, bis das Messgerät fertig ist. Nun erst wird der Flanschring 22 übergeschoben. Der Innendurchmesser des Flanschringes 22 ist dann natürlich größer als der größte Außendurchmesser des Messrohres mit angebrachter Anformung 12. Das Zwischenstück 16 kann beispielsweise aus zwei Halbschalen bestehen, die von den Seiten an das Messrohrende 8 angebracht und miteinander verrastet werden, und zwar so, dass das ringförmige Zwischenstück 16 mit einem Innendurchmesser entsteht, der größer als der Messrohrdurchmesser, aber kleiner als der Durchmesser der Anformung ist.

Die Anformung 12a am Ende des Prozessrohres kann auch bereits bei der Fertigung des Prozessrohres angebracht worden sein, oder sie wird in Einbaulage erst aufgewickelt. Das prozessrohrseitige Zwischenstück 16a ist auf die gleiche Art gebildet wie das messrohrseitige Zwischenstück 16. Beide können aus Metall oder auch wieder aus Faserverbundwerkstoff bestehen. Sie liegen nach ihrer Anbringung noch locker auf den ersten Flanken 13, 13a der beiden Anformungen 12, 12a auf, können aber auch bereits in einer form- und/oder kraftschlüssigen Verbindung angebracht sein.

Bereits vor dem Aufbringen der Zwischenstücke 16, 16a wurden die Flanschscheiben 22, 22a auf die Enden des Messrohres 6 bzw. Prozessrohres 4 aufgeschoben. Sie liegen locker auf und lassen sich leicht verschieben. Ihre Gestalt, insbesondere Außendurchmesser, Dicke sowie Anzahl und Durchmesser der Bohrungen, ist kundenspezifisch gewählt und gefertigt.

Zur Fertigstellung der Flanschverbindung werden beide Flanschscheiben in ihre Einbauposition gebracht, so dass ihre inneren Umfangsflächen 24, 24a formschlüssig an den äußeren Umfangsflächen 20, 20a der Zwischenstücke 16, 16a anliegen. Dann werden die Spannschrauben 28 eingeführt und beide Flanschscheiben mittels dieser gegeneinander gepresst und mit den Kontermuttern 29 so verspannt, dass gegensinnig auf das Messrohr 6 und das Prozessrohr 4 wirkende axiale Kräfte ausgeübt werden. Das Messrohrende wird dadurch gegen das Prozessrohrende gedrückt und beide werden so verspannt, dass über die zwischen dem Messrohrende und dem Leitungsrohrende befindliche Dichtfläche 14 dann das Messrohr 6 fluiddicht mit dem Prozessrohr 4 verbunden ist.

Fig. 2 zeigt eine weitere Ausführungsform einer erfindungsgemäßen Flanschverbindung. Gleiche, ähnliche oder gleichwirkende Bauteile sind dabei mit denselben Bezugsziffern wie in Fig. 1 versehen, ergänzt um einen hochgestellten Apostroph. Es ist nur der auf dem Messrohr 6' befindliche Teil der Flanschverbindung gezeigt, der auf dem Prozessrohr befindliche Gegenpart kann analog zu diesem oder auch konventionell durch einen angeschweißten Flansch oder in der Art wie in Fig. 1 gezeigt ausgeführt sein. Die Ausführungsform nach Fig. 2 unterscheidet sich von derjenigen der Fig. 1 dadurch, dass die Längsschnittkontur der flach ansteigenden ersten Flanke 13' der Anformung 12' hyperbelförmig ausgebildet ist. Entsprechend ist die innere Umfangsfläche 18' des Zwischenstückes 16' dieser hyperbelartigen Längsschnittkontur angepasst, so dass beide beim Verspannen wieder - wie der Schlüssel ins Schloss - ineinander passen und somit eine form- und kraftschlüssige Verbindung zur Übertragung der Axialkräfte herstellbar ist. Die hyperbelförmige Längsschnittkontur hat den Vorteil, dass die Kräfteverteilung optimiert eingestellt werden kann.

Ein weiterer Unterschied zwischen den Fig. 2 und 1 besteht darin, dass in der Ausführungsform nach Fig. 2 das Messrohr 6' mit der Anformung 13' am Messrohrende komplett in einem Herstellungsgang aus Faserverbundwerkstoff aufgebaut und beispielsweise in Wickeltechnik hergestellt wurde.

Das Messrohr 6' mit der Anformung 13' könnte auch ein Gussteil sein, und die Anformung 13' beim Gießen direkt mit angegossen worden sein. Ebenso könnte auch anstelle einer Hyperbelform eine andere Kurvenform für die Längsschnittkontur der Anformung 13' gewählt werden.

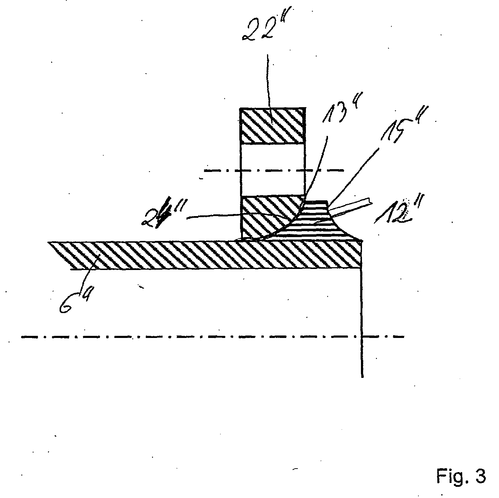

Die Fig. 3 zeigt eine dritte Ausführungsform einer erfindungsgemäßen Flanschverbindung. Gleiche, ähnliche oder gleichwirkende Bauteile sind dabei mit denselben Bezugsziffern wie in Fig. 1 versehen, ergänzt um zwei hochgestellte Apostrophe. Die Anformung ist in Form einer Wulst 13" mit tafelbergartiger Längsschnittkontur ausgebildet, aufgewickelt auf das Endstück des Messrohres 6" aus Faserverbundwerkstoff und versehen mit zwei Flanken 13" und 15", die beide eine hyperbelartige Längsquerschnittskontur aufweisen. Bei der Flanschverbindung nach Fig. 3 ist die innere Umfangsfläche 24" der Flanschscheibe 22" so ausgebildet, dass ihre Längsschnittskontur derjenigen der hyperbelförmigen Längsschnittskontur der ansteigenden Flanke 13" der Wulst 12" angepasst ist, so dass beide beim Verspannen wieder - wie der Schlüssel ins Schloss - ineinander passen und somit eine form- und kraftschlüssige Verbindung zur Übertragung der Axialkräfte herstellbar ist.

Fig. 3 zeigt somit eine erfindungsgemäße Flanschverbindung ohne Zwischenstück. Die Flanschscheibe muss bei dieser Ausführungsform über das Messrohrende geschoben werden, bevor die Wulst 12" aufgebracht wird. Dies kann entweder bei der Fertigung geschehen oder nachträglich kurz vor dem Einbau des Messgerätes in die Prozessrohrleitung.

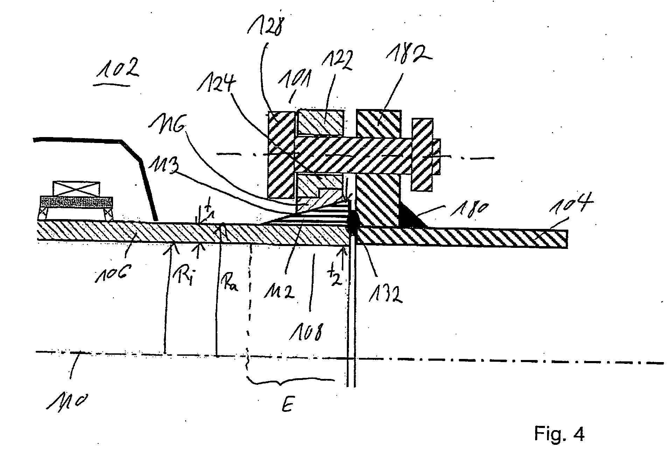

Fig. 4 zeigt eine Ausführungsform einer erfindungsgemäßen Flanschverbindung mit einem auf der Prozessrohrseite in herkömmlicher Art an dem Prozessrohr 104 angeschweißten Gegenflansch 182, so dass eine Schweißnaht 180 an der Nahtstelle zwischen dem Prozessrohr 104 und dem Gegenflansch 182 entsteht. Der messrohrseitige teil der Flanschverbindung ist genauso aufgebaut wie in Fig. 1 beschrieben. Gleiche oder gleichwirkende Bauteile oder Baugruppen tragen im Übrigen in Fig. 4 dieselben Bezugsziffern wie in Fig. 1, erhöht jeweils um den Wert 100.

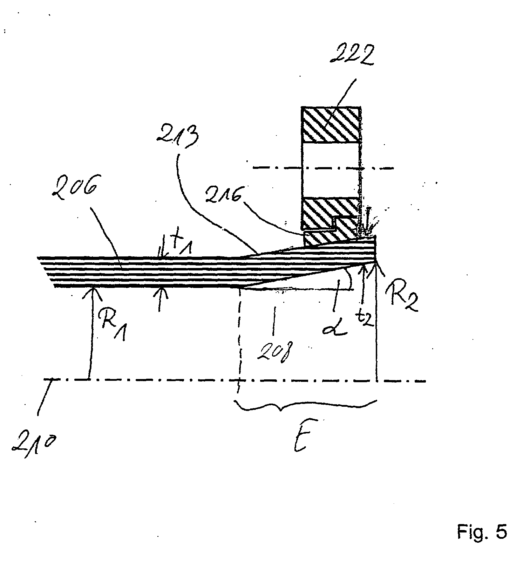

Fig. 5 zeigt eine weitere Ausführungsform der Erfindung, mit einer konischen Aufweitung des Messrohres am Messrohrende. Gleiche, ähnliche oder gleichwirkende Bauteile sind dabei mit denselben, jedoch um 200 erhöhten Bezugsziffern wie in Fig. 1 versehen. Es ist nur der auf dem Messrohr 206 befindliche Teil der Flanschverbindung gezeigt, der auf dem Prozessrohr befindliche Gegenpart kann analog zu diesem oder auch konventionell durch einen angeschweißten Flansch oder in der Art wie in Fig. 1 gezeigt ausgeführt sein.

Das Messrohr 203 ist in einem Erweiterungsbereich E am Messrohrende 208 aufgeweitet, derart, dass durch die Aufweitung eine zum Rohrende 208 des Messrohres 206 hin ansteigende Flanke 213 gebildet ist. Die Rohrwandstärke t2 im Erweiterungsbereich E ist hier unverändert gegenüber der Rohrwandstärke t1 außerhalb des Erweiterungsbereiches E. Dagegen wird der Rohrinnendurchmesser zum Rohrende hin größer. Außerhalb des Erweiterungsbereiches E hat das Messrohr 206 einen Innendurchmesser R1, zum Ende des Erweiterungsbereiches E und damit des Messrohres 206 hin ist der Rohrinnendurchmesser aufgeweitet auf einen Wert R2, wobei R2 > R1 ist.

Der Längsschnitt der äußeren Umfangskontur des Messrohres im Erweiterungsbereich E entspricht einem Polynom 1. Grades, also einer Geraden mit einer positiven Steigung zum Rohrende hin. Es ist in dem Beispiel nach Fig. 5 eine konusförmige Aufweitung mit einem Konuswinkel α gezeigt.

Das Messrohr 206 mit dem Erweiterungsbereich E ist im Beispiel nach Fig. 5 aus einem Metallrohr gefertigt, beispielsweise in Gusstechnik. Der Erweiterungsbereich E mit der konischen Aufweitung könnte aber auch in konventioneller Art und Weise an das Messrohr 206 angeschweißt sein. Es könnte auch das Messrohr 206 zusammen mit der Aufweitung im Erweiterungsbereich E komplett in Faserverbundtechnik, beispielsweise durch Aufwickeln, hergestellt sein.

Die Ausführungsform nach Fig. 5 kann in strömungstechnischer Sicht auch als ein Messrohr mit einem Einlaufbereich - dieser entspricht dem Erweiterungsbereich E - und einer eingeschnürten Messzone - diese entspricht dem Messrohrbereich außerhalb der Erweiterungsbereiches E. Das Prozessrohr, das mittels der erfindungsgemäßen Flanschverbindung nach Fig. 5 an das Messrohr angeschlossen wird, hat einen Innendurchmesser von R2. Die Messzone hat also einen kleineren Innendurchmesser als das Prozessrohr, daher oben die Verwendung des Begriffes "eingeschnürte Messzone". Wenn das Messgerät ein Durchflussmessgerät ist und das Messrohr 206 in der Ausführungsform nach Fig. 5 dementsprechend das Messrohr eines Durchflussmessgerätes, so bekommt das strömende Medium in dem Messrohr aufgrund des verringerten Messrohrquerschnittes eine höhere Strömungsgeschwindigkeit im Messrohr als außerhalb des Messrohres im Prozessrohr. Wenn das Messgerät ein magnetisch-induktives Durchflussmessgerät ist, so wirkt sich eine Erhöhung der Strömungsgeschwindigkeit im Messrohr positiv auf die Messgenauigkeit aus. Somit würde sich bei einer erfindungsgemäßen Flanschverbindung nach der Ausführungsform gemäß Fig. 5 als weiterer Vorteil neben der einfachen Ausführung der Flanschverbindung eine erhöhte Messgenauigkeit ergeben.

Aus strömungstechnischen Gründen ist für eine Ausführung der Erfindung gemäß Fig. 5 ein Winkel α von 16° sehr günstig. Andere größere oder kleinere Winkel, beispielsweise 10°, 12°, 14°, 18°, 20°, 30° wären ebenfalls vorteilhaft.

Die im Vorstehenden beschriebenen Ausführungsbeispiele geben nicht abschließend alle möglichen Ausführungsformen von erfindungsgemäßen Flanschverbindungen wieder. Auch alle hier nicht ausführlich beschriebenen, aber sich durch Kombinationen aus den hier beschriebenen Ausführungsformen oder Teilen oder einzelnen Merkmalen von verschiedenen der hier gezeigten Ausführungsformen ergebenden weiteren denkbaren Ausführungsformen sollen daher von der vorliegenden Anmeldung mit erfasst sein.

## Patentansprüche

1. Flanschverbindung, insbesondere zur Verbindung des Messrohres (6) eines Messgerätes mit einer Prozessrohrleitung (4), umfassend eine geräteseitige (22) und eine leitungsseitige (22a) Flanschscheibe, wobei die geräteseitige Flanschscheibe (22) eine innere (24) und eine äußere Umfangsfläche aufweist, **dadurch gekennzeichnet, dass** die Rohrwand des Messrohres (6) an der Rohrendzone (8) einen Bereich mit gegenüber der Rohrmittelzone vergrößertem Außendurchmesser (Erweiterungsbereich) (12) und mit einer auf das Rohrende (8) des Messrohres (6) hin ansteigenden Flanke (13) aufweist, und dass in eingebautem Zustand von der geräteseitigen Flanschscheibe (22) über den Erweiterungsbereich (12) axiale Kräfte auf das Rohrende (8) des Messrohres (6) übertragbar sind.

2. Flanschverbindung nach Anspruch 1, **dadurch gekennzeichnet, dass** die Rohrwand des Messrohres (6) in dem Erweiterungsbereich eine radial nach außen weisende Anformung (12) aufweist.

3. Flanschverbindung nach einem der vorhergehenden Ansprüche, **dadurch gekennzeichnet, dass** die radiale Anformung (12) als eine Wulst mit einer zum Rohrende (8) des Messrohres (6) hin kontinuierlich ansteigenden Flanke (13) gebildet ist.

4. Flanschverbindung nach einem der vorhergehenden Ansprüche, **dadurch gekennzeichnet, dass** die radiale Anformung (12) durch schichtweises Aufbringen von Faserverbundwerkstoff gebildet ist.

5. Flanschverbindung nach einem der vorhergehenden Ansprüche, **dadurch gekennzeichnet, dass** die radiale Anformung (12) durch Aufwickeln von Faserverbundwerkstoff gebildet ist.

6. Flanschverbindung nach Anspruch 1, **dadurch gekennzeichnet, dass** das Messrohr (6) in dem Erweiterungsbereich (12) aufgeweitet ist, derart, dass durch die Aufweitung eine zum Rohrende (8) des Messrohres (6) hin kontinuierlich ansteigende Flanke (13) gebildet ist.

7. Flanschverbindung nach Anspruch 6, **dadurch gekennzeichnet, dass** das Messrohr (6) in dem Erweiterungsbereich (12) bei gleichbleibender Rohrwandstärke aufgeweitet ist.

8. Flanschverbindung nach Anspruch 6 oder 7, **dadurch gekennzeichnet, dass** das Messrohrendstück im Erweiterungsbereich konusförmig aufgeweitet ist.

9. Flanschverbindung nach Anspruch 8, **dadurch gekennzeichnet, dass** der Konuswinkel am Übergang zwischen dem Messrohrmittelteil und dem Erweiterungsbereich einen Wert zwischen 1° und 45° aufweist, insbesondere zwischen 10° und 40°, bevorzugt zwischen 15° und 35° und besonders bevorzugt zwischen 28° und 32°.

10. Flanschverbindung nach einem der vorhergehenden Ansprüche, **dadurch gekennzeichnet, dass** das Messrohr (6) mit dem Erweiterungsbereich (12) ganz oder teilweise aus Faserverbundwerkstoff gebildet ist.

11. Flanschverbindung nach einem der vorhergehenden Ansprüche, **dadurch gekennzeichnet, dass** das Messrohr (6) mit dem Erweiterungsbereich (12) ganz oder teilweise aus Metall gebildet ist

12. Flanschverbindung nach einem der vorhergehenden Ansprüche, **dadurch gekennzeichnet, dass** das Messrohr (6) als Metallteil und der Erweiterungsbereich ganz oder teilweise aus Faserverbundwerkstoff gebildet ist.

13. Flanschverbindung nach einem der vorigen Ansprüche, **dadurch gekennzeichnet, dass** die geräteseitige Flanschscheibe (12) in Richtung auf das Rohrende (8) des Messrohres (6) hin auf die ansteigende Flanke (13) des Erweiterungsbereiches (12) aufschiebbar ist.

14. Flanschverbindung nach einem der vorigen Ansprüche, **dadurch gekennzeichnet, dass** die geräteseitige Flanschscheibe (22) über ein zwischen der Flanschscheibe (22) und dem Erweiterungsbereich (12) angeordnetes Zwischenstück (16) auf die ansteigende Flanke des Erweiterungsbereiches (12) aufschiebbar ist.

15. Flanschverbindung nach Anspruch 14, **dadurch gekennzeichnet, dass** das Zwischenstück (16) mehrteilig ausgebildet ist.

16. Flanschverbindung nach einem der vorhergehenden Ansprüche, **dadurch gekennzeichnet, dass** die Längsschnittkontur der inneren Umfangsfläche (24) der geräteseitigen Flanschscheibe (22) oder des Zwischenstückes (16) an die Umfangskontur des Messrohres (6) im Erweiterungsbereich (12) angepasst ist.

17. Flanschverbindung nach einem der vorhergehenden Ansprüche, **dadurch gekennzeichnet, dass** in eingebautem Zustand zwischen der geräteseitigen Flanschscheibe (22) und dem Messrohr (6) im Erweiterungsbereich (12) oder zwischen dem Zwischenstück (16) und dem Messrohr (6) im Erweiterungsbereich (12) eine form- und/oder kraftschlüssige Verbindung besteht.

18. Flanschverbindung nach einem der vorhergehenden Ansprüche, **dadurch gekennzeichnet, dass** die äußere Umfangskontur des Messrohres (6) im Erweiterungsbereich (12) bereichsweise einem Polynom n-ten Grades entspricht oder bereichsweise aus Polynomen n-ten Grades zusammengesetzt ist, wobei n eine ganze Zahl, insbesondere zwischen 0 und 10, bevorzugt zwischen 0 und 4 und besonders bevorzugt 1 oder 2 oder 3 ist.

19. Flanschverbindung nach einem der vorhergehenden Ansprüche, **dadurch gekennzeichnet, dass** die äußere Umfangskontur des Messrohres (6) im Erweiterungsbereich (12) bereichsweise einem Polynom n-ten Grades entspricht oder bereichsweise aus Polynomen n-ten Grades zusammengesetzt ist, wobei n eine ganze Zahl, insbesondere zwischen 0 und -10, bevorzugt zwischen 0 und -4 und besonders bevorzugt -1 oder -2 oder -3 ist.

20. Flanschverbindung nach einem der vorhergehenden Ansprüche, **dadurch gekennzeichnet, dass** das Messrohrende (8) als Dichtfläche ausgebildet ist.

21. Flanschverbindung nach einem der vorhergehenden Ansprüche, **dadurch gekennzeichnet, dass** an dem Messrohrende (8) ein Dichtring (32) angebracht ist.

22. Flanschverbindung nach einem der vorhergehenden Ansprüche, **dadurch gekennzeichnet, dass** eine zweite, rohrendseitige Flanke (15) des Erweiterungsbereiches (12) mit dem Rohrende (8) eine Dichtfläche bildet.

23. Flanschverbindung nach einem der vorhergehenden Ansprüche, **dadurch gekennzeichnet, dass** das Zwischenstück (16) und/oder die geräteseitige Flanschscheibe (22) vor dem Einbau in ihrer Einbaulage provisorisch durch geeignete konstruktive Maßnahmen gehalten sind.

24. Flanschverbindung nach Anspruch 23, **dadurch gekennzeichnet, dass** das Zwischenstück (16) und/oder die geräteseitige Flanschscheibe (22) vor dem Einbau in ihrer Einbaulage provisorisch durch Klebepunkte und/oder mechanische Haltehilfen und/oder durch Umwickeln mit Faserverbundwerkstoff gehalten sind.

25. Flanschverbindung nach einem der vorhergehenden Ansprüche mit einem prozessrohrseitigen Gegenflansch gemäß einem der Ansprüche 1 bis 24.

26. Flanschverbindung nach einem der vorherigen Ansprüche mit einem prozessrohrseitigen Gegenflansch konventioneller Bauart.

27. Verfahren zur Herstellung einer Flanschverbindung, insbesondere zur Verbindung des Messrohres eines Messgerätes für fluide Stoffe mit einer Rohrleitung, wobei die Flanschverbindung eine geräteseitige und eine leitungsseitige Flanschscheibe umfasst und wobei die geräteseitige Flanschscheibe eine innere und eine äußere Umfangsfläche aufweist und die Rohrwand des Messrohres zumindest an den Rohrendzonen durch übereinanderliegende Schichten aus unterschiedlichen Materialien gebildet sein kann, **dadurch gekennzeichnet, dass** an die Rohrwand des Messrohres an wenigstens einer Rohrendzone eine radial nach außen weisende Anformung angeformt wird und dass in eingebautem Zustand von der Flanschscheibe über die Anformung axiale Zugkräfte auf das Messrohr übertragen werden.

28. Verfahren nach Anspruch 27, **dadurch gekennzeichnet, dass** die radiale Anformung als Wulst mit einer zum Rohrende hin kontinuierlich ansteigenden, konisch oder mit hyperbolischer Längsschnittkontur ausgebildeten Flanke geformt wird.

29. Verfahren nach einem der Ansprüche 27 oder 28, **dadurch gekennzeichnet, dass** die Anformung der radialen Anformung als einer der letzten Fertigungsschritte bei der Herstellung des Messgerätes durchgeführt wird.

30. Verfahren nach einem der Ansprüche 27 bis 29, **dadurch gekennzeichnet, dass** zur Kraftübertragung zwischen der Flanschscheibe und der Anformung ein Zwischenstück angeordnet wird, das wenigstens abschnittsweise mit der Flanke der radialen Anformung in Verbindung steht.

31. Verfahren nach einem der Ansprüche 27 bis 30, **dadurch gekennzeichnet, dass** die radiale Anformung durch schichtweises Aufbringen von Faserverbundwerkstoff gebildet wird.

32. Verfahren nach einem der Ansprüche 27 bis 31, **dadurch gekennzeichnet, dass** die radiale Anformung durch Aufwickeln von Faserverbundwerkstoff gebildet wird.

33. Verfahren nach einem der Ansprüche 27 bis 32, **dadurch gekennzeichnet, dass** durch eine zweite, rohrendseitige Flanke der Anformung zusammen mit dem Rohrende eine Dichtfläche gebildet wird.

34. Verfahren nach einem der Ansprüche 27 bis 33, **dadurch gekennzeichnet, dass** das Zwischenstück und/oder die Flanschscheibe vor dem Einbau in ihrer Einbaulage provisorisch durch Klebepunkte und/oder mechanische Haltehilfen und/oder durch Umwickeln mit Faserverbundwerkstoff gehalten werden.
